# EUROPEAN PATENT APPLICATION

(11) **EP 3 950 116 A1**
(43) Date of publication of application: **09.02.2022**
(21) Application number: 20783067.0
(22) Date of filing: 13.02.2020
(51) Int. Cl.: B01J 19/12, C01B 3/04, C01B 32/40, B01J 8/00

(54) **CARBON DIOXIDE PHOTOCONVERSION REACTOR**

(30) Priority: 03.04.2019 KR 20190038766
(71) Applicant: Korea University Research and Business Foundation, Seoul 02841 (KR)
(72) Inventor: KANG, Yongtae, Seoul 06608 (KR); JUNG, Hansol, Hanam-si, Gyeonggi-do 13011 (KR); KIM, Minjae, Seoul 02574 (KR)
(74) Representative: RGTH
(86) International application number: PCT/KR2020/002000
(87) International publication number: WO 2020/204346

(57) **Abstract**

According to the inventive concept, a carbon dioxide photo-reactor includes a body having a closed interior space, provided with a photocatalytic material in the interior space, and that generates a reaction gas and a liquefied fluid from carbon dioxide through a photoconversion reaction, a gas injector that provides a passage, through which the carbon dioxide flows, a vapor injector that provides a passage, through which vapor flows, a gas discharger, through which the generated reaction gas is discharged, a liquid discharger, through which the generated liquefied fluid is discharged, and at least one elongate structure disposed to cross the interior space in a predetermined direction.

## Description

### [TECHNICAL FIELD]

The inventive concept relates to a carbon dioxide photo-reactor.

### [BACKGROUND ART]

In modern society, fossil fuels are increasingly used due to industrial developments, and thus cause global warming problems and resource depletion problems.

Accordingly, effective means for solving the global warming problems have been studied all over the world, and as representative methods, carbon dioxide reducing projects related to technologies for collection and storage of carbon dioxide have been operated by way of showing examples or already started.

The technologies for collection and storage of carbon dioxide are technologies for collecting carbon dioxide generated in a carbon dioxide mass discharge source, such as a petroleum factory, a thermal power plant, a cement factory, or a steel mill, which uses fossil fuels as main energy sources, and permanently isolating the collected carbon dioxide in the land and sub-bottom structures.

However, the technologies for collection and storage of carbon dioxide have been developed considerably all over the countries, but the land environment conditions of Korea are lack in ground surface spaces topographically, so that it is difficult to secure a large storage space and there may be a possibility of a severe accident when carbon dioxide is leaked.

Further, the technologies for collection and storage of carbon dioxide may instantaneously damage the human bodies when the concentration of carbon dioxide that is present in air increases to a specific value or more due to leakage of a large amount of carbon dioxide caused by an unintended accident, and the leakage of carbon dioxide over long time may contaminate under-ground water around a ground surface, which is used for drinking water or agricultural water by human beings, even though the amount of the leaked carbon dioxide is small.

Accordingly, a resource circulating carbon dioxide treating technology that does not simply store carbon dioxide but is safe in an aspect of a long term is necessary.

### [DETAILED DESCRIPTION OF THE INVENTION]

### [TECHINICAL PROBLEM]

Embodiments of the inventive concept provide a carbon dioxide photo-reactor that may convert carbon dioxide into recyclable energy by using the carbon dioxide, light, and vapor.

Embodiments of the inventive concept also provide a carbon dioxide photo-reactor that is helpful for diffusion of carbon dioxide and vapor in a closed interior space by changing flows of the carbon dioxide and the vapor.

Embodiments of the inventive concept provide a carbon dioxide photo-reactor that may enhance photoconversion efficiency by increasing a contact area between carbon dioxide and vapor and a coated photocatalytic material.

### [TECHNICAL SOLUTION]

According to an aspect of the inventive concept, a carbon dioxide photo-reactor includes a body having a closed interior space, provided with a photocatalytic material in the interior space, and that generates a reaction gas and a liquefied fluid from carbon dioxide through a photoconversion reaction, a gas injector that provides a passage, through which the carbon dioxide flows, a vapor injector that provides a passage, through which vapor flows, a gas discharger, through which the generated reaction gas is discharged, a liquid discharger, through which the generated liquefied fluid is discharged, and at least one elongate structure disposed to cross the interior space in a predetermined direction.

According to an embodiment of the inventive concept, the body may form a hexahedral shape by coupling a plurality of transparent flat plates such that the plurality of transparent flat plates are separable from each other, and, among the plurality of transparent flat plates, a transparent flat plate, to which light is input from a light source, may be formed of quartz.

According to an embodiment of the inventive concept, the body may further include a ventilation plate disposed at a location that is spaced apart from a bottom surface by a predetermined distance, and through which the liquefied fluid passes.

According to an embodiment of the inventive concept, the body may include at least one insertion groove formed on one side of an inner surface of the body to correspond to a size of the elongate structure.

According to an embodiment of the inventive concept, the elongate structures may be inserted into the insertion groove to be detachable, and the plurality of elongate structures may be disposed to be spaced apart from each other by a predetermined interval.

According to an embodiment of the inventive concept, the elongate structures may be disposed to extend in a direction that is perpendicular to at least one of an inflow direction of the carbon dioxide through the gas injector and an inflow direction of the vapor through the vapor injector.

According to an embodiment of the inventive concept, outer peripheral surfaces of the elongate structures may be coated with the photocatalytic material.

According to an embodiment of the inventive concept, the photocatalytic material may include a material selected from a group consisting of titanium dioxide, zinc oxide, zirconium oxide, cadmium sulfide, vanadium oxide, tungsten trioxide, strontium titanate, and a combination thereof.

### [ADVANTAGEOUS EFFECTS OF THE INVENTION]

According to the carbon dioxide photo-reactor according to the embodiments of the inventive concept, carbon dioxide may be converted into recyclable energy by using the carbon dioxide, light, and vapor

Further, the carbon dioxide photo-reactor according to the embodiments of the inventive concept may be helpful for diffusion of carbon dioxide and vapor in a closed interior space by changing flows of the carbon dioxide and the vapor

In addition, according to the carbon dioxide photo-reactor according to the embodiments of the inventive concept, photoconversion efficiency may be enhanced by increasing a contact area between carbon dioxide and vapor and a coated photocatalytic material.

### [DESCRIPTION OF THE DRAWINGS]

FIG. 1 is a view illustrating a carbon dioxide photoconversion system according to an embodiment of the inventive concept;
FIG. 2 is a cross-sectional view illustrating a photo-reactor according to an embodiment of the inventive concept;
FIG. 3 is a perspective view of a photo-reactor according to an embodiment of the inventive concept;
FIGS. 4A and 4B are views of a photo-reactor according to an embodiment of the inventive concept, viewed from the top and the bottom;
FIG. 5 is a graph depicting an amount of generated carbon monoxide according to an embodiment of the inventive concept; and
FIG. 6 is a view illustrating a distribution state of a volume of vapor in an interior of a photo-reactor according to time and streamline flows of the vapor in the interior of the photo-reactor according to time when a structure according to an embodiment of the inventive concept is installed.

### [BEST MODE]

Hereinafter, exemplary embodiments of the inventive concept will be described in more detail with reference to the accompanying drawings. The embodiments of the inventive may be modified in various forms, and the scope of the inventive concept should not be construed to be limited to the following embodiments. The embodiments of the inventive concept are provided to describe the present inventive for an ordinary person skilled in the art more completely. Accordingly, the shapes of the components of the drawings are exaggerated to emphasize clearer description thereof.

The configurations of the inventive concept for clearly describing a solution for the problem that is to be solved by the inventive concept will be described in detail with reference to the accompanying drawings based on a preferred embodiment of the inventive concept, in which the same reference numerals are given for the same elements in denoting the reference numerals for the elements even though they are present in different drawings, and when a drawing has to be referenced for a description of the embodiment, the elements in another drawing also may be cited.

The embodiment of the inventive concept relates to a carbon dioxide photo-reactor and the photo-reactor in the specification pertains to a heterogeneous inorganic photocatalytic system, for example, using titanium dioxide and other semiconductor photocatalytic materials, but the inventive concept is not limited thereto and any apparatus related to a photochemical conversion system for carbon dioxide, which collects energy from a light source and converts the energy to chemical energy may be possible without any limitation. For example, it is construed that the photo-reactor may be utilized in a homogeneous reaction system using a transition metal complex, a combined system, in which various photocatalysts, such as homogeneous catalysts and heterogeneous catalysts, are combined, and a photoelectric-chemical reaction system for applying optical energy and electric energy at the same time by utilizing a photocatalytic material as an electrode.

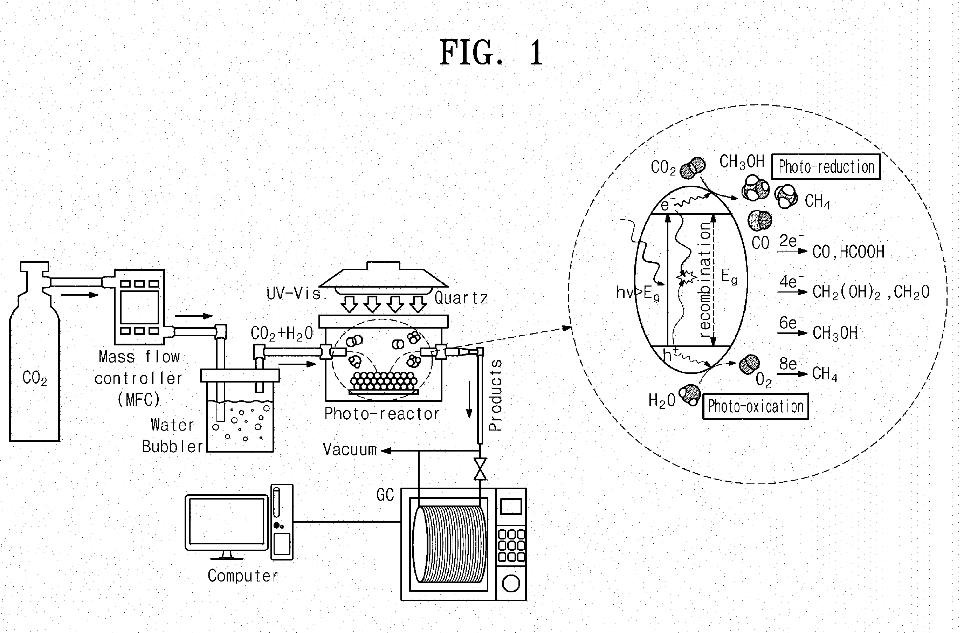

FIG. 1 is a view illustrating a carbon dioxide photoconversion system according to an embodiment of the inventive concept.

A reaction of a carbon dioxide photoconversion system, which is represented by artificial photosynthesis, is similar to a photosynthesis reaction, in which high-energy organic materials are synthesized from water and carbon dioxide by using a light source as an energy source.

The photosynthesis reactions in the nature system largely include light reactions, in which water is decomposed into oxygen and hydrogen while absorbing light, and dark reactions, in which carbon dioxide is reduced by using the obtained hydrogen and finally organic materials are synthesized.

Accordingly, as illustrated in FIG. 1, a carbon dioxide photoconversion system according to the inventive concept may largely include a carbon dioxide storage tank, a mass flow controller (MFC), a photo-reactor, a gas chromatography (GC) device, and a light source device.

The carbon dioxide storage tank supplies the carbon dioxide that is a reactant to the photo-reactor via the mass flow controller, and a reaction vessel generates hydrogen and oxygen through decomposition of water by using light energy while mimicking the photosynthesis reaction of the nature system and reduces the carbon dioxide by using the stored carbon dioxide, the hydrogen, and electrons excited by the energy.

Then, various reduction reactions and products may be present according to the number of the electrons and protons used, and the products may be formic acid, monoxide, formaldehyde, methanol, and methane.

Furthermore, the products may be injected through a gas chromatography, and through this, a qualitative analysis of recognizing configurations of the products and a quantitative analysis of recognizing an amount and an increase speed of the products.

Furthermore, in the carbon dioxide photoconversion system, it is important to develop a photocatalytic material that may efficiently decompose carbon dioxide and selectively allow a specific reaction such as a synthesis of methanol, but studies on the material, the shape, and the structure of a photo-reaction in consideration of the efficiency of the photoconversion reaction is necessary to substantially increase the efficiency of the carbon dioxide photoconversion system.

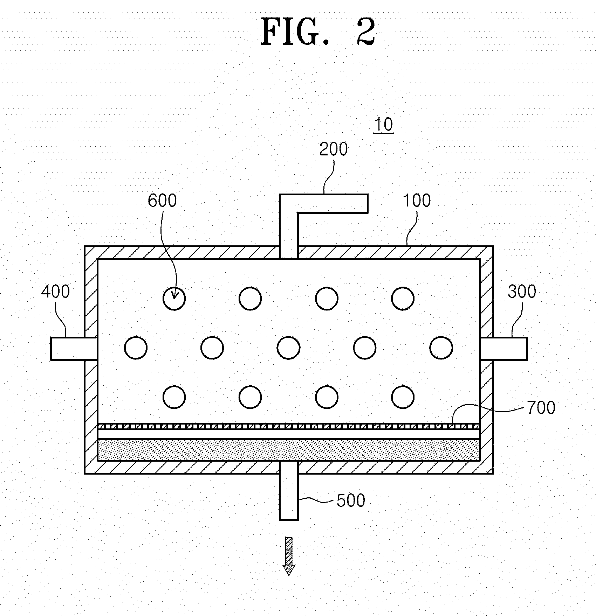

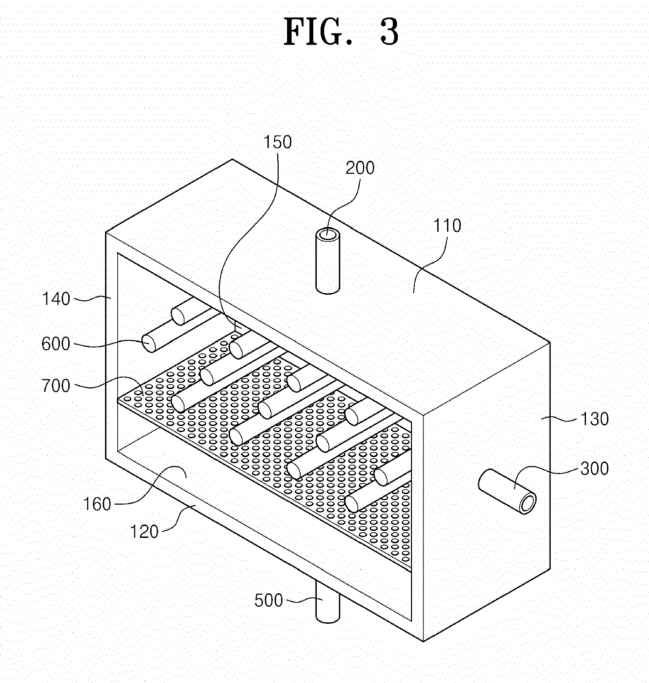

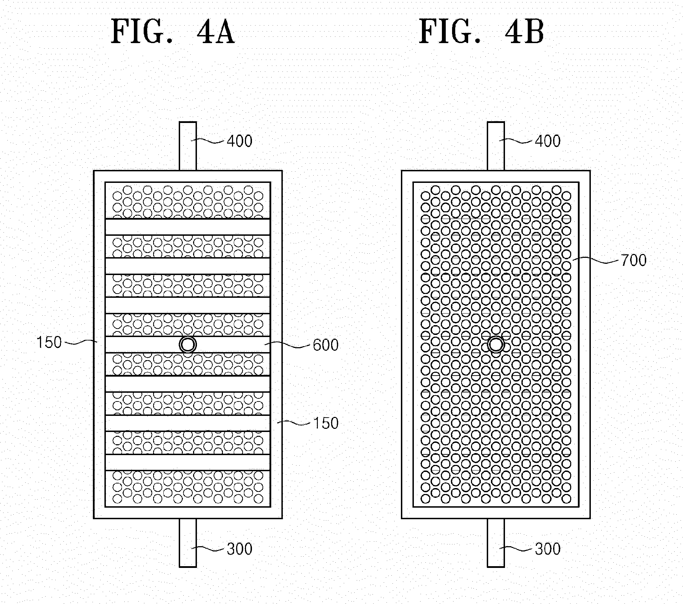

FIG. 2 is a cross-sectional view illustrating a photo-reactor according to an embodiment of the inventive concept. FIG. 3 is a perspective view of a photo-reactor according to an embodiment of the inventive concept. FIGS. 4A and 4B are views of a photo-reactor according to an embodiment of the inventive concept, viewed from the top and the bottom.

In addition, FIG. 4A is a plan view of the photo-reactor according to the embodiment of the inventive concept, when viewed from the top. FIG. 4B is a bottom view of a photo-reactor according to an embodiment of the inventive concept, when viewed from the bottom.

As illustrated in FIGS. 2, 3, 4A, and 4B, a photo-reactor 10 includes a body 100, a gas injector 200, a vapor injector 300, a gas discharger 400, a liquid discharger 500, an elongate structure 600, and ventilation plate 700.

The body 100 has a closed interior space 160, and a photocatalytic material is provided in the interior space 160 and a reaction gas and a liquefied fluid are generated from carbon dioxide through a photoconversion reaction.

That is, the body 100 may provide a specific space, in which the carbon dioxide is converted into the reaction gas and the liquefied fluid that may be recycled, by using the light input from the light source.

The reaction gas may be monoxide, formic acid, formaldehyde, and methane gas, and the liquefied fluid may include water, methanol, and the like.

Furthermore, the body 100 is configured to form a hexahedral shape by coupling a plurality of transparent flat plates such that the plurality of transparent flat plates are separable from each other.

The transparent flat plates preferably include soda lime, ultraviolet ray transmitting polymethylcrylate (UV-T PMMA), quartz, and borosilicate, but the inventive concept is not limited thereto as long as the transparent flat plates may induce reflection and refraction of the light input by the light source.

In addition, the transparent flat plates of the body 100 may include a ceiling plate 110, a bottom plate 120, a front plate 130, a rear plate 140, and a pair of side plates 150.

Furthermore, it is preferable that, among the transparent flat plates of the body 100, the transparent flat plate, to which light is input by the light source, includes quartz that has a high light transmission at bands of all wavelengths, and it is preferable that the other transparent flat plates include ultraviolet ray transmitting polymethyl methylcrylate.

For example, referring to FIG. 3, according to the inventive concept, the ceiling plate 110 of the body 100, to which the light is input by the light source, includes quartz, and the bottom plate 120, the front plate 130, the rear plate 140, and the side plates 150 include ultraviolet ray transmitting polymethyl methylcrylate.

Furthermore, a plurality of insertion grooves (not illustrated) corresponding to the size of the elongate structure 600 may be further provided on one side of an inner surface of the body 100.

In more detail, the plurality of insertion grooves (not illustrated) may be formed on the inner surfaces of the pair of side plates 150 to be spaced apart from each other by a specific interval.

Furthermore, it is preferable that the interior space 160 of the body 100 is coated with the photocatalytic material (not illustrated), and in detail, the inner surfaces of the ceiling plate 110, the bottom plate 120, the front plate 130, the rear plate 140, and the side plates 150 are coated with the photocatalytic material.

The photocatalytic material includes a material selected from a group consisting of titanium dioxide, zinc oxide, zirconium oxide, cadmium sulfide, vanadium oxide, tungsten trioxide, strontium titanate, and a combination thereof.

In the inventive concept, it is preferable that the photocatalytic material includes titanium dioxide, but the inventive concept is not limited thereto as long as the photocatalytic material may perform a carbon dioxide reduction reaction.

The gas injector 200 may provide a passage, through which carbon dioxide flows.

Furthermore, the gas injector 200 is communicated with the body 100, and in more detail, is coupled to the ceiling plate 110 of the body 100.

Furthermore, the gas injector 200 is connected to an external carbon dioxide storage tank, and may supply the carbon dioxide that is necessary during the photoconversion reaction into the interior space 160 of the body 100.

Furthermore, a flow meter (not illustrated) may be installed in the gas injector 200, and the gas injector 200 may inject a proper amount of carbon dioxide at a specific flow rate.

The vapor injector 300 provides a passage, through which vapor flows.

Furthermore, the vapor injector 300 is communicated with the body 100, and in more detail, is coupled to the front plate 130 of the body 100.

Furthermore, the vapor injector 300 is connected to an external vapor ejecting apparatus, and may supply the vapor that is necessary during the photoconversion reaction into the interior space 160 of the body 100.

In addition, because the vapor injector 300 may inject a proper amount of water at a specific flow rate in the form of vapor, the vapor may be uniformly diffused such that a dead zone is not present in the interior space 160 of the body 100.

Furthermore, the vapor injector 300 continuously injects the vapor until the photoconversion reaction is ended.

The gas discharger 400 may discharge the reaction gas to the outside during the photoconversion reaction.

Furthermore, the gas discharger 400 is communicated with the body 100, and in more detail, is coupled to the rear plate 140 of the body 100.

Furthermore, the gas discharger 400 is connected to an external gas chromatography device, and the gas chromatography device may separate the reaction gases generated during the photoconversion reaction according to their properties and record the compositions of the gas according to time, and may quantitatively measure an increase amount and an increase speed of the generated gases according to time.

Then, the generated gases are injected into the gas chromatography device through a carrier gas, such as helium, hydrogen, and nitrogen.

The liquid discharger 500 may discharge the liquefied fluid to the outside during the photoconversion reaction.

Furthermore, the liquid discharger 500 is communicated with the body 100, and in more detail, is coupled to the bottom plate 120 of the body 100.

Furthermore, the liquid discharger 500 is connected to an external discharged material storage tank, and the generated liquefied fluid may be stored in the discharged material storage tank through the liquid discharger 500.

Furthermore, a valve (not illustrated) may be installed in the liquid discharger 500, and a proper amount of liquefied fluid collected may be discharged to the outside through the valve.

The elongate structures 600 are disposed to cross the interior space 160 of the body 100 in a preset direction.

In the embodiment of the inventive concept, it is preferable that the elongate structure 600 have rod shapes, but the inventive concept is not limited thereto as long as the flows of the carbon dioxide and the vapor may become complex.

Furthermore, the elongate structure 600 may be inserted into the insertion grooves formed on one side of the inner surfaces of the side plate 150 to be detachable, and the plurality of elongate structures may be disposed to be spaced apart from each other by a predetermined interval.

In addition, it is preferable that all of the elongate structures 600 are coupled to the plurality of insertion grooves, but the inventive concept is not limited thereto as long as main factors, such as flow rates and material transmission rates of the carbon dioxide and the vapor may be changed.

That is, the number of the elongate structures 600 disposed in the body 100 may be adjusted according to the determination of the user.

Furthermore, the elongate structures 600 are disposed to extend in a direction that is perpendicular to at least one of an inflow direction of the carbon dioxide through the gas injector 200 and a flow direction of the vapor through the vapor injector 300.

Furthermore, outer peripheral surfaces of the elongate structures 600 may be coated with the photocatalytic material.

In addition, various kinds of materials may be used as the photocatalytic material coated on the elongate structures 600, and the same photocatalytic material may be coated again.

Further, it is preferable that the elongate structures 600 include ultraviolet ray transmitting polymethyl methylcrylate, but the inventive concept is not limited thereto as long as the elongate structures 600 may induce reflection and refraction of the light input by the light source.

That is, the elongate structures 600 may include soda lime, quartz, and borosilicate.

The elongate structures 600 changes the flows of the carbon dioxide and the vapor supplied into the interior space 160 of the body 100 and is helpful for diffusion of the carbon dioxide and the vapor in the interior of the photo-reactor 10, and accordingly, enhances photoconversion efficiency by increasing a contact area between the carbon dioxide and the vapor that are present in the interior of the photo-reactor 10 and the photocatalytic material.

Furthermore, in the embodiment of the inventive concept, the elongate structures 600 may increase the amount of the light input to the photocatalytic material coated in the interior space 160 of the body 100 by inducing reflection and refraction of the light input by the light source.

The ventilation plate 700 may be disposed in an area that is adjacent to the liquid discharger 500.

In more detail, the ventilation plate 700 is disposed in an area that is adjacent to the inner surface of the bottom plate 120 of the body 100, and is coupled to the inner surfaces of the front plate 130, the rear plate 140, and the side plates 150.

That is, the ventilation plate 700 is disposed at a location that is spaced from the bottom surface of the body 100 by a predetermined distance, and the liquefied fluid may pass through the ventilation plate 700.

Furthermore, the ventilation plate 700 may include ultraviolet ray transmitting polymethyl methylcrylate, and an upper surface of the ventilation plate 700 may be coated with the photocatalytic material and a plurality of vent holes are formed therein.

Accordingly, because the ventilation plate 700 is disposed in the body 100, the vapor supplied into the interior space 160 of the body 100 may be prevented from being liquefied and accumulated, and may form a space, in which the accumulated water and the liquefied fluid generated during the photoconversion reaction may be stored.

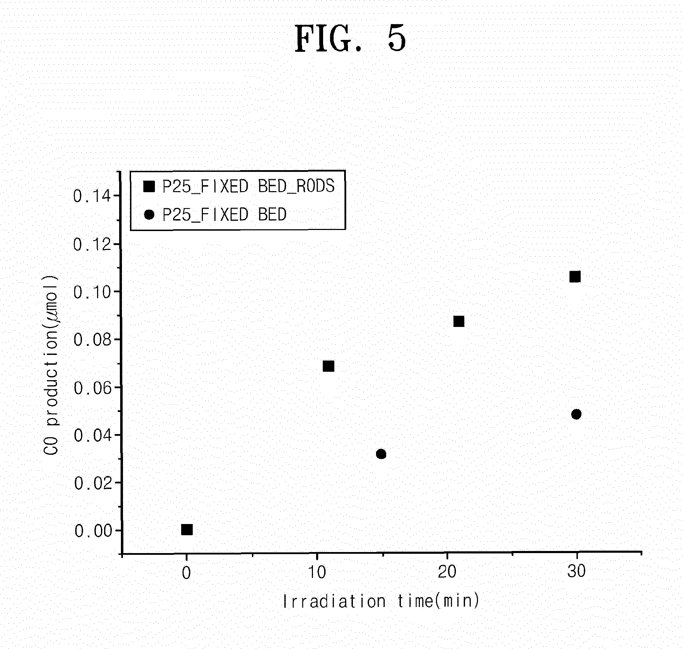

FIG. 5 is a graph depicting an amount of generated carbon monoxide according to an embodiment of the inventive concept.

As illustrated in FIG. 5, only an amount of monoxide generated by the photo-reactor 10 according to the embodiment of the inventive concept through a photoconversion reaction of carbon dioxide was measured and is illustrated.

A photoconversion rate when the elongate structures 600 were not added was 0.0477 umol/gcat and a photoconversion rate when the elongate structures 600 were added was 0.10509 umol/gcat, whereby the photoconversion rates were improved by about 2.1 times when the elongate structures 600 were added.

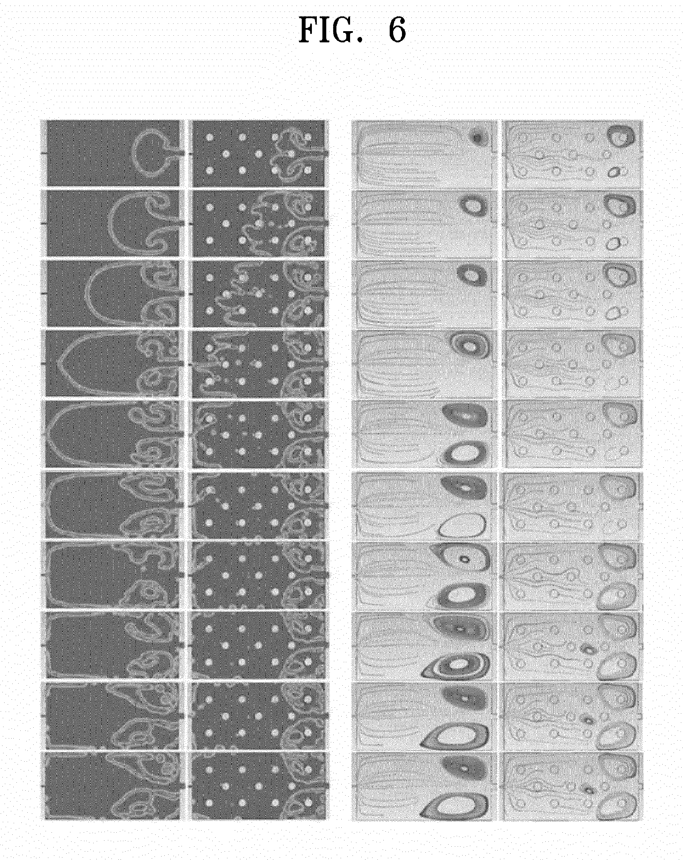

FIG. 6 is a view illustrating a distribution state of a volume of vapor in an interior of a photo-reactor according to time and streamline flows of the vapor in the interior of the photo-reactor according to time when a structure according to an embodiment of the inventive concept is installed.

Referring to FIG. 6, a distribution state of the volume of the vapor when the elongate structures 600 are disposed, and the flows of streamlines of the vapor injected through the vapor injector 300 according to the time may be compared in unit of 1 second.

Due to the characteristics of the injection of vapor, the vapor starts to be diffused from a starting point of a specific distance according to the injection speed thereof, and as illustrated in FIG. 6, it may be identified that the vapor diffused to an upper end and a lower end of an injection hole stays while circulating. It may be identified that the disposed elongate structures 600 brings the diffusion point of the vapor forwards, and act as an obstructive factor in the diffusion process to make the flows of the vapor complex.

The above detailed description exemplifies the inventive concept. Furthermore, the above-mentioned contents describe the exemplary embodiment of the inventive concept, and the inventive concept may be used in various other combinations, changes, and environments. That is, the inventive concept can be modified and corrected without departing from the scope of the inventive concept that is disclosed in the specification, the equivalent scope to the written disclosures, and/or the technical or knowledge range of those skilled in the art. The written embodiment describes the best state for implementing the technical spirit of the inventive concept, and various changes required in the detailed application fields and purposes of the inventive concept can be made. Accordingly, the detailed description of the inventive concept is not intended to restrict the inventive concept in the disclosed embodiment state. Furthermore, it should be construed that the attached claims include other embodiments.

## Claims

1. A carbon dioxide photo-reactor(10) comprising:
a body(100) having a closed interior space(160), provided with a photocatalytic material in the interior space(160), and configured to generate a reaction gas and a liquefied fluid from carbon dioxide through a photoconversion reaction;
a gas injector(200) configured to provide a passage, through which the carbon dioxide flows;
a vapor injector(300) configured to provide a passage, through which vapor flows;
a gas discharger(400), through which the generated reaction gas is discharged;
a liquid discharger(500), through which the generated liquefied fluid is discharged; and
at least one elongate structure(600) disposed to cross the interior space(160) in a predetermined direction.

2. The carbon dioxide photo-reactor(10) of claim 1, wherein the body(100) forms a hexahedral shape by coupling a plurality of transparent flat plates such that the plurality of transparent flat plates are separable from each other, and
wherein, among the plurality of transparent flat plates, a transparent flat plate, to which light is input from a light source, is formed of quartz.

3. The carbon dioxide photo-reactor(10) of claim 1, wherein the body(100) further includes:
a ventilation plate(700) disposed at a location that is spaced apart from a bottom surface by a predetermined distance, and through which the liquefied fluid passes.

4. The carbon dioxide photo-reactor(10) of claim 1, wherein the body(100) includes:
at least one insertion groove formed on one side of an inner surface of the body to correspond to a size of the elongate structure(600).

5. The carbon dioxide photo-reactor(10) of claim 4, wherein the elongate structures(600) are inserted into the insertion groove to be detachable, and the plurality of elongate structures(600) are disposed to be spaced apart from each other by a predetermined interval.

6. The carbon dioxide photo-reactor(10) of claim 5, wherein the elongate structures(600) are disposed to extend in a direction that is perpendicular to at least one of an inflow direction of the carbon dioxide through the gas injector(200) and an inflow direction of the vapor through the vapor injector(300).

7. The carbon dioxide photo-reactor(10) of claim 6, wherein outer peripheral surfaces of the elongate structures(600) are coated with the photocatalytic material.

8. The carbon dioxide photo-reactor(10) of claim 1, wherein the photocatalytic material includes a material selected from a group consisting of titanium dioxide, zinc oxide, zirconium oxide, cadmium sulfide, vanadium oxide, tungsten trioxide, strontium titanate, and a combination thereof.
